# EUROPÄISCHE PATENTSCHRIFT

(11) **EP 3 429 880 B1**
(45) Veröffentlichungstag und Bekanntmachung des Hinweises auf die Patenterteilung: **06.05.2020**
(21) Anmeldenummer: 17715899.5
(22) Anmeldetag: 07.03.2017
(51) Int. Cl.: B60K 7/00, B60B 3/00, B60B 5/02, B60B 9/00

(54) **HYBRIDFELGE EINES MIT EINEM RADNABENMOTOR VERSEHENEN RADES**
HYBRID RIM OF A WHEEL WITH A WHEEL HUB MOTOR
JANTE HYBRIDE AVEC ROUE ÉQUIPÉE D'UN MOTEUR DANS LE MOYEU

(30) Priorität: 18.03.2016 DE 102016105050
(43) Veröffentlichungstag der Anmeldung: 23.01.2019
(73) Patentinhaber: Citic Dicastal Co., Ltd., 066011 Qin Huangdao City, Hei Bei Province (CN)
(72) Erfinder: BUSCHJOHANN, Thomas, 31171 Nordstemmen (DE); GEISLER, Stefan, 31157 Sarstedt (DE)
(74) Vertreter: Gong, Jinping
(86) Internationale Anmeldenummer: PCT/DE2017/100178
(87) Internationale Veröffentlichungsnummer: WO 2017/157381

(56) Entgegenhaltungen:
- WO-A1-2004/067295
- WO-A1-2011/151439
- WO-A1-2015/185874
- DE-A1-102009 038 928
- DE-A1-102013 224 149
- DE-A1-102014 209 176
- DE-U1-202011 108 560
- FR-A1- 3 024 300
- US-A1- 2006 158 050

## Beschreibung

Die Erfindung bezieht sich auf eine Hybridfelge eines mit einem Radnabenmotor versehenen Rades.

Es ist bekannt, im Innenraum einer Felge einen Elektromotor als Radnabenmotor zu installieren. Der Radnabenmotor weist einen Elektromotor mit einem Rotor sowie einem Stator auf, wobei der Rotor zur Erzeugung eines Motordrehmoments mit dem Stator in Wechselwirkung steht und wobei der Rotor um eine Hauptdrehachse relativ zu dem Stator drehbar angeordnet ist. Der Stator ist drehfest zu dem Fahrzeug angeordnet. Der Rotor ist dagegen mit einem Rad drehfest verbunden. Bekanntermaßen überlappen der Rotor und das Rad in radialer Richtung zu der Hauptdrehachse. Das Rad ist insbesondere mit dem Rotor unmittelbar verbunden.

Radnabenmotoren werden in verschiedenen Ausführungen bei Elektro-Kraftfahrzeugen eingesetzt, wobei das Antriebsmoment nicht über ein Getriebe an ein angetriebenes Rad übertragen wird, sondern das angetriebene Rad unmittelbar mit einem Rotor des Radnabenmotors verbunden ist. Beispielsweise offenbaren die DE 10 2006 040 220 A1, DE 10 2008 019 974 B4 oder DE 10 2013 202 592 A1 Radnabenmotoren für Kraftfahrzeuge.

Ferner ist aus DE 20 2011 108 560 U1 einen Radkörper eines Rades eines Elektrofahrzeugs bekannt, der einen Motoraufnahmekörper zum Aufnehmen eines Elektromotors zum Antreiben des Rades umfasst.

Ein bekannter Radnabenmotor ist ein Elektromotor eines Außenrotor-Typs, bei dem ein Rotor auf einer Außenseite eines Stators angeordnet ist. Der Rotor umfasst ein Rotorgehäuse mit einer ringförmigen Struktur und Permanentmagnete, die am Innenumfang des Rotorgehäuses angebracht sind. Das Rotorgehäuse ist im Innenraum der Felge angeordnet, wobei der Rotor als Außenläufer ausgebildet ist.

Ausgehend von diesem Stand der Technik liegt der Erfindung die Aufgabe zugrunde, eine Felge für mit Radnabenmotoren betriebene Kraftfahrzeuge zu verbessern.

Erfindungsgemäß wird diese Aufgabe durch eine Hybridfelge mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Die erfindungsgemäße Hybridfelge eines mit einem Radnabenmotor versehenen Rades, insbesondere eines Kraftfahrzeugs, umfasst ein Nichtmetallteil und ein Metallteil, wobei das Rotorgehäuse des Radnabenmotors zumindest teilweise das Metallteil der Hybridfelge bildet.

Der für diese Art Hybridfelge vorgesehene Radnabenmotor ist also ein Elektromotor des vorgenannten Außenrotor-Typs.

Durch diese Maßnahme wird zum einen im Vergleich zu einer herkömmlichen Felge, die im Innenraum ein Rotorgehäuse als solches aufnimmt, neuer Frei- bzw. Bauraum geschaffen, beispielsweise für nützliche Komponenten des Radnabenmotors, wobei durch das Mehr an Frei- bzw. Bauraum Radnabenmotoren mit einer höheren Leistung zur Verfügung gestellt werden können. Zumindest ein Teil des Rotorgehäuses übernimmt hierzu quasi zumindest teilweise die Funktion der Felge.

Zum anderen kann durch den Verbund aus Nichtmetallteil und Metallteil aber auch vorteilhaft Gewicht eingespart werden.

Da ein Radwechsel bei dieser erfindungsgemäßen Art der Felgenausbildung nicht ohne weiteres durchführbar ist, kann es von Vorteil sein, wenn die Felge derart ausgebildet ist, dass ein Reifen mit Notlaufeigenschaften, so genannter RunFlat-Reifen, auf die erfindungsgemäße Felge aufziehbar ist.

Es kann von Vorteil sein, wenn das Nichtmetallteil und das Metallteil zur Bildung der Hybridfelge form-, kraft- und/oder stoffschlüssig miteinander verbunden sind.

Nichtmetallteil und Metallteil können zunächst separat fertiggestellt und anschließend miteinander verbunden werden. Eine andere Möglichkeit besteht darin, zunächst das Metallteil herzustellen und dieses dann im Fertigstellungsverfahren bzw. während des Fertigstellungsverfahrens des Nichtmetallteils mit diesem zu verbinden. Das Metallteil bildet im zuletzt genannten Fall quasi einen Träger für das Nichtmetallteil.

Erfindungsgemäß umfasst die Hybridfelge ein Felgenbett, ein äußeres und ein inneres Felgenhorn sowie eine ein Mittenloch, Befestigungslöcher und/oder Speichen aufweisende Radscheibe.

Es kann von Vorteil sein, wenn der Verbund aus Nichtmetallteil und Metallteil zumindest die Wandung des Felgenbettes der Hybridfelge bildet.

Erfindungsgemäß ist das Felgenbett ringförmig ausgebildet und ist die Wandung des Felgenbettes aus einem ringförmigen äußeren Nichtmetallteil und einem ringförmigen inneren Metallteil zusammengesetzt. Damit wird in radialer Richtung mehr Frei- bzw. Bauraum geschaffen. Vorzugsweise entspricht die Wandstärke des Felgenbettes im Wesentlichen der Wandstärke bekannter Nichthybridfelgen.

Es kann von Vorteil sein, wenn die Felgenhörner und/oder die Radscheibe aus einem Nichtmetall bestehen.

Es kann von Vorteil sein, wenn die aus einem Nichtmetall bestehende Wandung des Felgenbettes, die Felgenhörner und/oder die Radscheibe vorzugsweise einstückig miteinander verbunden sind.

Es kann von Vorteil sein, wenn die Radscheibe und/oder insbesondere eine oder mehr als eine Speiche der Radscheibe derart ausgebildet ist, dass diese zur Kühlung während der Fahrt Luft gegen Rotorgehäuse leitet.

Es kann von Vorteil sein, wenn das Nichtmetallteil einen Kunststoff, insbesondere einen Faserverbund-Kunststoff, vorzugsweise einen glasfaserverstärkten Kunststoff (GFK) oder besonders bevorzugt einen carbonfaserverstärkten Kunststoff (CFK) umfasst, insbesondere aus einem solchen besteht.

Es kann von Vorteil sein, wenn der Kunststoff mit dem Metallteil unter Ausbildung einer Verbundhaftung verbunden ist.

Erfindungsgemäß wiest das Rotorgehäuse im Innenraum der Hybridfelge zwischen der Wandung des ringförmigen Felgenbetts und dem die Befestigungslöcher aufweisenden Lochkreis eine Haube auf.

Die Haube dient auch dazu, die Komponenten des Radnabenmotors möglichst dicht gegenüber der Umgebung abzuschließen, um das Eindringen von Schmutz oder Spritzwasser aus dem Straßenverkehr zu verhindern.

Es kann von Vorteil sein, wenn die Haube des Rotorgehäuses auf der Innenseite der gegebenenfalls die Speichen aufweisenden Radscheibe angeordnet ist.

Dadurch ist es möglich, ansprechende Designs der die Speichen aufweisenden Radscheibe zu entwerfen. Dadurch, dass die Haube des Rotorgehäuses an die Radscheibe angrenzt lässt sich das Rotorgehäuse außerdem optimal kühlen. Die Radscheibe und/oder insbesondere deren Speichen können in ihrer Geometrie und/oder Anordnung so ausgebildet sein, dass das Rotorgehäuse während der Fahrt des Kraftfahrzeuges erfolgreich mit Luft gekühlt wird.

Es kann von Vorteil sein, wenn die Haube und das ringförmige Rotorgehäuse einstückig ausgebildet sind, wodurch eine sehr gute Kälteweiterleitung gewährleistet wird.

Erfindungsgemäß ist das Rotorgehäuse nach Art einer Rotorglocke aus der Haube und dem Metallteil der Wandung des ringförmigen Felgenbetts ausgebildet.

Es kann von Vorteil sein, wenn das Rotorgehäuse gegossen oder geschmiedet ist.

Es kann von Vorteil sein, wenn das Rotorgehäuse im Schwerkraftguss, Druckguss, Niederdruckguss oder Gegendruckguss hergestellt ist.

Es kann von Vorteil sein, wenn das Rotorgehäuse aus Leichtmetall, insbesondere aus einer Aluminiumlegierung besteht.

Weitere Einzelheiten und vorteilhafte Ausgestaltungen der Erfindung ergeben sich aus der nachfolgenden Beschreibung in Verbindung mit der Zeichnung. In dieser zeigen
Fig. 1 schematisch in perspektivischer Darstellung eine erfindungsgemäße Hybridfelge mit Rotorglocke mit Blick von außen,
Fig. 2 schematisch in perspektivischer Darstellung eine erfindungsgemäße Hybridfelge mit Rotorglocke mit Blick von innen und
Fig. 3 schematisch einen Querschnitt durch die erfindungsgemäße Hybridfelge mit Rotorglocke.

Werden in den Figuren gleiche Bezugsziffern verwendet, so bezeichnen diese gleiche Teile, so dass zwecks Vermeidung von Wiederholungen nicht bei jeder Figurenbeschreibung auf ein bereits beschriebenes Bauteil erneut eingegangen wird.

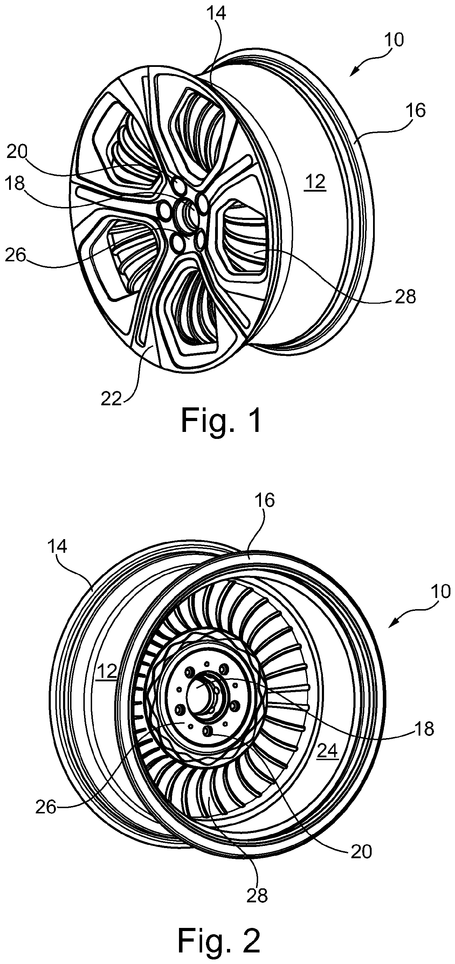

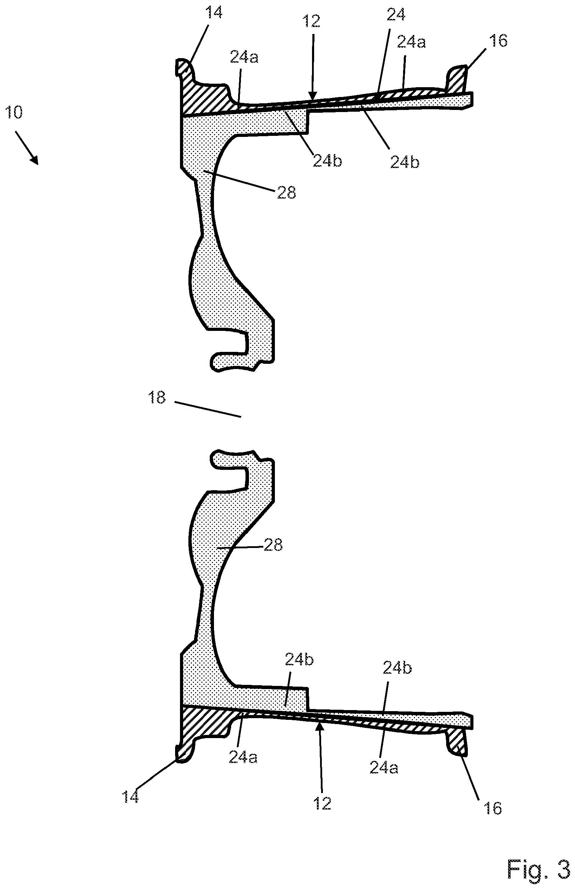

Die in den Fig. 1 bis 3 dargestellte Hybridfelge 10 eines mit einem Radnabenmotor versehenen Rades, insbesondere eines Kraftfahrzeugs, umfasst ein Felgenbett 12, einen äußeren und einen inneren Felgenhorn 14, 16 und eine ein Mittenloch 18, Befestigungslöcher 20 und Speichen 22 aufweisende Radscheibe.

Erfindungsgemäß umfasst die Hybridfelge 10 ein Nichtmetallteil und ein Metallteil, wobei das Rotorgehäuse des Radnabenmotors zumindest teilweise das Metallteil der Hybridfelge 10 bildet.

Das Felgenbett 12 der Hybridfelge 10 ist ringförmig ausgebildet, wobei die Wandung 24 des Felgenbettes 12 aus einem ringförmigen äußeren Nichtmetallteil 24a und einem ringförmigen inneren Metallteil 24b unter Ausbildung einer Verbundhaftung zusammengesetzt ist.

Der aus einem Nichtmetall bestehende Teil 24a des Felgenbettes 12 und die ebenfalls aus einem Nichtmetall bestehenden Felgenhörner 14, 16 sind aus einem Stück ausgebildet.

Die Radscheibe kann ebenfalls aus einem Nichtmetall hergestellt und entweder in einem Stück mit wenigstens einem weiteren Nichtmetallteil ausgebildet oder als separates Teil mit wenigstens einem weiteren Nichtmetallteil verbunden sein.

Bei dem Nichtmetallteil handelt es sich um einen carbonfaserverstärkten Kunststoff (CFK).

Vorliegend ist das aus Metall bestehende Rotorgehäuse nach Art einer Rotorglocke aus Haube 28 und der aus Metall bestehenden Wandung 24b des ringförmigen Felgenbetts 12 ausgebildet, wobei die Haube 28 des Rotorgehäuses im Innenraum der Hybridfelge 10 zwischen der Wandung 24 des ringförmigen Felgenbetts 12 und dem die Befestigungslöcher 20 aufweisenden Lochkreis 26 ausgebildet und auf der Innenseite zur die Speichen 22 aufweisenden Radscheibe angeordnet ist.

### Bezugszeichenliste

(ist Teil der Beschreibung)
10 Hybridfelge
12 Felgenbett
14 äußeres Felgenhorn
16 inneres Felgenhorn
18 Mittenloch
20 Befestigungsloch
22 Speiche
24 Wandung des Felgenbetts
24a Wandung des Felgenbettes aus Nichtmetall
24b Wandung des Felgenbettes aus Metall
26 Lochkranz
28 Haube

## Patentansprüche

1. Hybridfelge (10) eines mit einem Radnabenmotor versehenen Rades, insbesondere eines Kraftfahrzeugs, umfassend ein Nichtmetallteil und ein Metallteil, wobei das Rotorgehäuse des Radnabenmotors zumindest teilweise das Metallteil der Hybridfelge (10) bildet, wobei die Hybridfelge (10) ein Felgenbett (12), ein äußeres und ein inneres Felgenhorn (14, 16) sowie eine ein Mittenloch (18), Befestigungslöcher (20) und/oder Speichen (22) aufweisende Radscheibe umfasst, und wobei das Felgenbett (12) ringförmig ausgebildet ist, **dadurch gekennzeichnet, dass** die Wandung (24) des Felgenbettes aus einem ringförmigen äußeren Nichtmetallteil (24a) und einem ringförmigen inneren Metallteil (24b) zusammengesetzt ist, wobei das Rotorgehäuse im Innenraum der Hybridfelge (10) zwischen der Wandung (24) des ringförmigen Felgenbetts (12) und dem die Befestigungslöcher (20) aufweisenden Lochkreis (26) eine Haube (28) aufweist, und wobei das Rotorgehäuse nach Art einer Rotorglocke aus der Haube (28) und dem Metallteil (24b) der Wandung (24) des ringförmigen Felgenbetts (12) ausgebildet ist.

2. Hybridfelge (10) nach Anspruch 1, **dadurch gekennzeichnet, dass** das Nichtmetallteil und das Metallteil zur Bildung der Hybridfelge (10) form-, kraft- und/oder stoffschlüssig miteinander verbunden sind.

3. Hybridfelge (10) nach zumindest einem der vorherigen Ansprüche 1 bis 2, **dadurch gekennzeichnet, dass** der Verbund aus Nichtmetallteil und Metallteil zumindest die Wandung (24) des Felgenbetts (12) der Hybridfelge (10) bildet.

4. Hybridfelge (10) nach zumindest einem der vorherigen Ansprüche 1 bis 3, **dadurch gekennzeichnet, dass** die Felgenhörner (14, 16) und/oder die Radscheibe aus einem Nichtmetall bestehen.

5. Hybridfelge (10) nach zumindest einem der vorherigen Ansprüche 1 bis 4, **dadurch gekennzeichnet, dass** das Nichtmetallteil (24a) der Wandung (24) des Felgenbettes (12), die Felgenhörner (14, 16) und/oder die Radscheibe vorzugsweise einstückig miteinander verbunden sind.

6. Hybridfelge (10) nach zumindest einem der vorherigen Ansprüche 1 bis 5, **dadurch gekennzeichnet, dass** die Radscheibe und/oder insbesondere eine oder mehr als eine Speiche der Radscheibe derart ausgebildet ist, dass diese zur Kühlung während des Fahrtbetriebs Luft gegen das Rotorgehäuse leitet.

7. Hybridfelge (10) nach zumindest einem der vorherigen Ansprüche 1 bis 6, **dadurch gekennzeichnet, dass** das Nichtmetallteil ein Kunststoff, insbesondere ein Faserverbund-Kunststoff, vorzugsweise ein glasfaserverstärkter Kunststoff (GFK) oder besonders bevorzugt ein carbonfaserverstärkter Kunststoff (CFK), ist.

8. Hybridfelge (10) nach Anspruch 7, **dadurch gekennzeichnet, dass** der Kunststoff mit dem Metallteil unter Ausbildung einer Verbundhaftung verbunden ist.

9. Hybridfelge (10) nach zumindest einem der vorherigen Ansprüche 1 bis 8, **dadurch gekennzeichnet, dass** die Haube (28) des Rotorgehäuses auf der Innenseite der gegebenenfalls die Speichen (22) aufweisenden Radscheibe angeordnet ist.

10. Hybridfelge (10) nach zumindest einem der vorherigen Ansprüche 1 bis 9, **dadurch gekennzeichnet, dass** das Rotorgehäuse gegossen oder geschmiedet ist.

11. Hybridfelge (10) nach zumindest einem der vorherigen Ansprüche 1 bis 10, **dadurch gekennzeichnet, dass** das Rotorgehäuse im Schwerkraftguss, Druckguss, Niederdruckguss oder Gegendruckguss hergestellt ist.

12. Hybridfelge (10) nach zumindest einem der vorherigen Ansprüche 1 bis 11, **dadurch gekennzeichnet, dass** das Rotorgehäuse aus Leichtmetall, insbesondere aus einer Aluminiumlegierung, besteht.

## Claims

1. Hybrid rim (10) of a wheel provided with a wheel hub motor, in particular of a motor vehicle, comprising a non-metal part and a metal part, wherein the rotor housing of the wheel hub motor at least partially forms the metal part of the hybrid rim (10), wherein the hybrid rim (10) comprises a rim base (12), an outer (14) and an inner (16) rim flange (14, 16) and a wheel disc having a center hole (18), mounting holes (20) and/or spokes (22), wherein the rim base (12) is annularly configured, **characterized in that** the wall (24) of the rim base is composed of an annular outer non-metal part (24a) and an annular inner metal part (24b), wherein the rotor housing has a hood (28) in the interior room of the hybrid rim (10) between the wall (24) of the annular rim base (12) and the hole circle (26) having the mounting holes (20), and wherein the rotor housing is configured in the manner of a rotor bell, which consists of the hood (28) and the metal part (24b) of the wall (24) of the annular rim base (12).

2. Hybrid rim (10) according to claim 1, **characterized in that** the non-metal part and the metal part are connected to each other in a form-, force- and/or material-fitting manner, in order to form the hybrid rim (10).

3. Hybrid rim (10) according to at least one of the preceding claims 1 to 2, **characterized in that** the composite of non-metal part and metal part forms at least the wall (24) of the rim base (12) of the hybrid rim (10).

4. Hybrid rim (10) according to at least one of the preceding claims 1 to 3, **characterized in that** the rim flanges (14, 16) and/or the wheel disc are made of a non-metal.

5. Hybrid rim (10) according to at least one of the preceding claims 1 to 4, **characterized in that** the non-metal part (24a) of the wall (24) of the rim base (12), the rim flanges (14, 16) and/or the wheel disc are connected to each other, preferably as one piece.

6. Hybrid rim (10) according to at least one of the preceding claims 1 to 5, **characterized in that** the wheel disc and/or in particular one or more than one spoke of the wheel disc is configured such that it conducts air toward the rotor housing for cooling during the driving operation.

7. Hybrid rim (10) according to at least one of the preceding claims 1 to 6, **characterized in that** the non-metal part is a plastic, in particular a fiber composite plastic, preferably a glass fiber-reinforced plastic (GFP) or particularly preferably a carbon fiber-reinforced plastic (CFP).

8. Hybrid rim (10) according to claim 7, **characterized in that** the plastic is connected to the metal part to form a composite bonding.

9. Hybrid rim (10) according to at least one of the preceding claims 1 to 8, **characterized in that** the hood (28) of the rotor housing is arranged on the inner side of the wheel disc, which, if necessary, has the spokes (22).

10. Hybrid rim (10) according to at least one of the preceding claims 1 to 9, **characterized in that** the rotor housing is casted or forged.

11. Hybrid rim (10) according to at least one of the preceding claims 1 to 10, **characterized in that** the rotor housing is produced by gravity casting, pressure casting, low-pressure casting or back pressure casting.

12. Hybrid rim (10) according to at least one of the preceding claims 1 to 11, **characterized in that** the rotor housing is made of light metal, in particular of an aluminum alloy.

## Revendications

1. Jante hybride (10) d'une roue munie d'un moteur-roue, en particulier d'un véhicule automobile, comprenant une partie non métallique et une partie métallique, dans laquelle le carter de rotor du moteur-roue forme au moins partiellement la partie métallique de la jante hybride (10), dans laquelle la jante hybride (10) comprend un fond de jante (12), un rebord de jante (14, 16) extérieur (14) et intérieur (16) et un disque de roue ayant un trou central (18), des trous de montage (20) et / ou des rayons (22), dans laquelle le fond de jante (12) est configurée de manière annulaire, **caractérisée en ce que** la paroi (24) de la base de jante est composée d'une partie annulaire extérieure non métallique (24a) et une partie annulaire intérieure métallique (24b), dans laquelle le carter de rotor a un capot (28) dans l'espace intérieur de la jante hybride (10) entre la paroi (24) du fond de jante (12) annulaire et le cercle de trous (26) ayant les trous de montage (20), et dans laquelle le carter de rotor est configuré à la manière d'un capot d'induit, qui se compose du capot (28) et de la partie métallique (24b) de la paroi (24) du fond de jante (12) annulaire.

2. Jante hybride (10) selon la revendication 1, **caractérisée en ce que** la partie non métallique et la partie métallique sont reliées entre elles d'une manière adaptée aux formes, forces et / ou matériaux, pour former la jante hybride (10).

3. Jante hybride (10) selon au moins l'une des revendications précédentes 1 à 2, **caractérisée en ce que** le composite de partie non métallique et de partie métallique forme au moins la paroi (24) du fond de jante (12) de la jante hybride (10).

4. Jante hybride (10) selon au moins l'une des revendications précédentes 1 à 3, **caractérisée en ce que** les rebords de jante (14, 16) et / ou le disque de roue sont réalisés en un matériau non métallique.

5. Jante hybride (10) selon au moins l'une des revendications précédentes 1 à 4, **caractérisée en ce que** la partie non métallique (24a) de la paroi (24) du fond de jante (12), les rebords de jante (14, 16) et / ou le disque de roue sont reliés entre eux, de préférence en une seule pièce.

6. Jante hybride (10) selon au moins l'une des revendications 1 à 5 précédentes, **caractérisée en ce que** le disque de roue et / ou en particulier un ou plusieurs rayons du disque de roue est configuré de manière telle qu'il conduit l'air vers le carter de rotor pour le refroidissement pendant l'opération de conduite.

7. Jante hybride (10) selon au moins l'une des revendications précédentes 1 à 6, **caractérisée en ce que** la partie non métallique est un plastique, notamment un plastique composite de fibres, de préférence un plastique renforcé de fibres de verre (PRV) ou de manière particulièrement préférée un plastique renforcé de fibres de carbone (PRC).

8. Jante hybride (10) selon la revendication 7, **caractérisée en ce que** le plastique est relié à la partie métallique pour former une liaison composite.

9. Jante hybride (10) selon au moins l'une des revendications précédentes 1 à 8, **caractérisée en ce que** le capot (28) du carter de rotor est disposé du côté intérieur du disque de roue qui, si nécessaire, présente les rayons (22).

10. Jante hybride (10) selon au moins l'une des revendications précédentes 1 à 9, **caractérisée en ce que** le carter de rotor est coulé ou forgé.

11. Jante hybride (10) selon au moins l'une des revendications précédentes 1 à 10, **caractérisée en ce que** le carter de rotor est réalisé par coulage par gravité, coulage sous pression, coulage sous basse pression ou coulage sous contre-pression.

12. Jante hybride (10) selon au moins l'une des revendications précédentes 1 à 11, **caractérisée en ce que** le carter de rotor est en métal léger, notamment en alliage d'aluminium.
